# EUROPEAN PATENT APPLICATION

(11) **EP 2 130 629 A1**
(43) Date of publication of application: **09.12.2009**
(21) Application number: 08425403.6
(22) Date of filing: 04.06.2008
(51) Int. Cl.: B23B 27/16

(54) **Multi-cutting edge insert with multi-fastener possibility to a locking tool**

(71) Applicant: SCF Snc di Colpani Gianfranco e Pier Giuseppe, 24043 Caravaggio, (BG) (IT)
(72) Inventor: Colpani, Pier Giuseppe, 24043 Caravaggio (BG) (IT)

(57) **Abstract**

The present invention concerns a multi-cutting edge insert with multi-fastener possibility to a locking tool.

The said insert is equipped with at most eight bidirectional cutting edges and embedding gaps and countersunk through hole for the fixing - in a singular or combined way - with fixing accessories such as screw, lockpin, clamping lever, pin, tie, eccentric and flask.

## Description

This invention pertains to a multi-cutting edge insert with multi-fastener possibility to a locking tool.

Inserts are elements used for the machining of different kind of materials (e.g. metals, wood, plastic etc.) worked in different shapes (bar, shaped, drawn, etc.)

The said elements have shapes, summit angles and cutting rakes that range according to the kind of machining and to the kind of material: inserts are therefore realized in different typologies, each one optimized to afford the best performances for the specific machining that must be executed.

Inserts are fixed on the terminal part of locking tools, generally provided with standardized shapes and composed by large bearing surfaces, to secure the stability of the same inserts during the machining.

In other words, the housing for the insert must be characterized by a specific geometry, designed to ensure the clamping to the locking tool.

The forces transimmitted to the insert during the machining could be of a remarkable entity: this fact determinates the need of locking modalities that keep the inserts in the suitable position, minimizing the vibrations.

Traditionally, locking systems differentiate because of the used mechanism to fix the inserts, e.g. lever locking tools, wedge-shaped bracket locking tools, pivot and bracket locking tools, screw locking tools, bracket locking tools etc.

Disadvantageously traditional inserts don't offer an adequate proportion between materials used for them production and working surfaces and are not characterized by an optimized geometry both for the fixing to locking tools and for the carrying out of different kind of machinings, with consequent troubles especially for the machinings that transmit to the insert forces of a remarkable entity.

On the contrary, from long time is felt necessity of turning inserts availability equipped with a geometry that assures an adequate fixing to the locking tools, allowing heavy machinings on particularly hard materials.

The aim of this industrial invention is to provide a positioning system provided with a geometry of bearing surfaces that assures a more effective fixing of the inserts.

Another aim of the present invention is to offer a unified system of positioning and fixing of inserts able to the housing and locking of inserts equipped with cutting vertexes with different shapes and use.

It is also an aim of the present invention to reduce the proportion between the raw materials and working surfaces of the inserts, by increasing the number of cutting edges.

Moreover, it is an aim of the present invention to realize a versatile solution for the locking with fixing accessories available.

These aims are obtained by this industrial invention regarding a multi-cutting edge insert with multi-fastener possibility to a locking tool.

The said insert is parallelepiped shaped and equipped with eight projections that comprise the bidirectional cutting vertexes.

To assure the contact with the bearing tool, the insert is equipped with bearing surfaces, some horizontal and some inclined.

The insert presents also a through hole - for the fixing with screw, lockpin, clamping lever, pin, tie, or eccentric - and four gaps for the fixing with flask.

The fixing of the insert in accordance with the present invention is optimized by the use of a locking tool equipped with a housing with three positioning surfaces - two vertical and one horizontal - for the bearing of the respective bearing surfaces of the insert.

The said housing is located on the terminal part or on the perimeter of a locking tool.

Threaded holes for the fixing of the insert by the means of accessories, provided with respective projections, characterize the said terminal part; the said threaded holes are located on one of the vertical bearing surfaces and on the upper surface of the same terminal part.

Finally, the upper surface of the terminal part of the locking tool presents inclined surfaces for the bearing of the respective surfaces of a double effect flask, provided with a projection for the fixing of an insert on a side and with projecting inclined surfaces and to be fixed to the insert by the means of a screw.

The screwing down of the screw determines the lowering and the positioning of the flask's projection in the insert's gap and the positioning of flask's inclined surfaces in the respective inclined surfaces of the locking tool.

The force transmitted by the screw to the flask is consequently conveyed to the insert that is so forced to lean on all the three bearing surfaces of the housing on the locking tool.

Advantageously this locking system allows the utilization of fixing accessories both in singular and in matched way, with the purpose of improving the effectiveness of the fixing and consequently the stiffness of the bearing of the insert on the tool.

Aspects and advantages of this invention will be clearer from the following explanatory description in order to enclosed drawings.

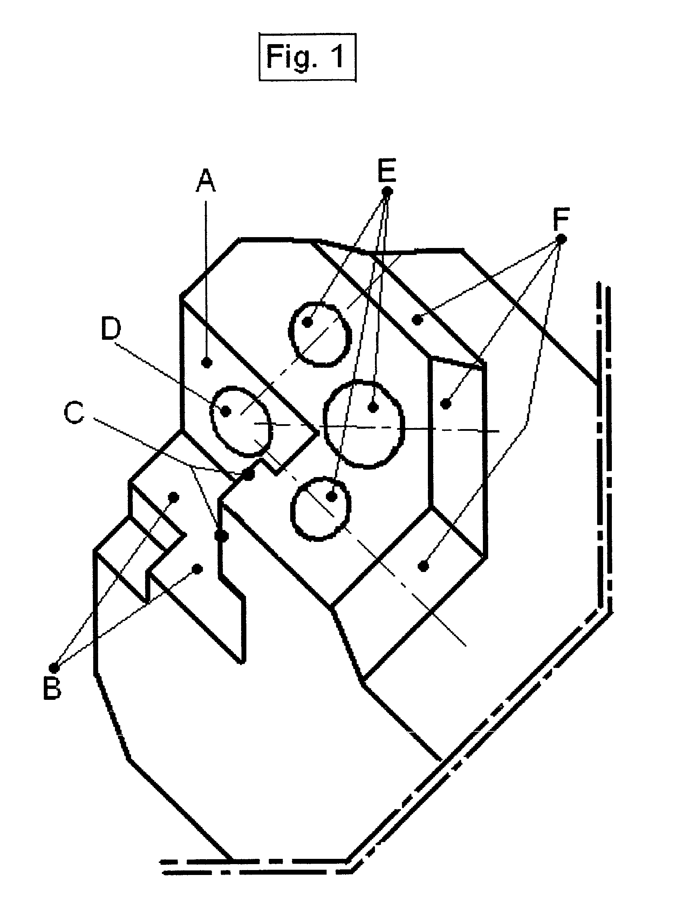

Fig. 1 represents a detail of the terminal part of the tool for the bearing of the insert.

The said terminal part is provided with three bearing surfaces fig. 1(A), fig. 1(B), fig. 1(C).

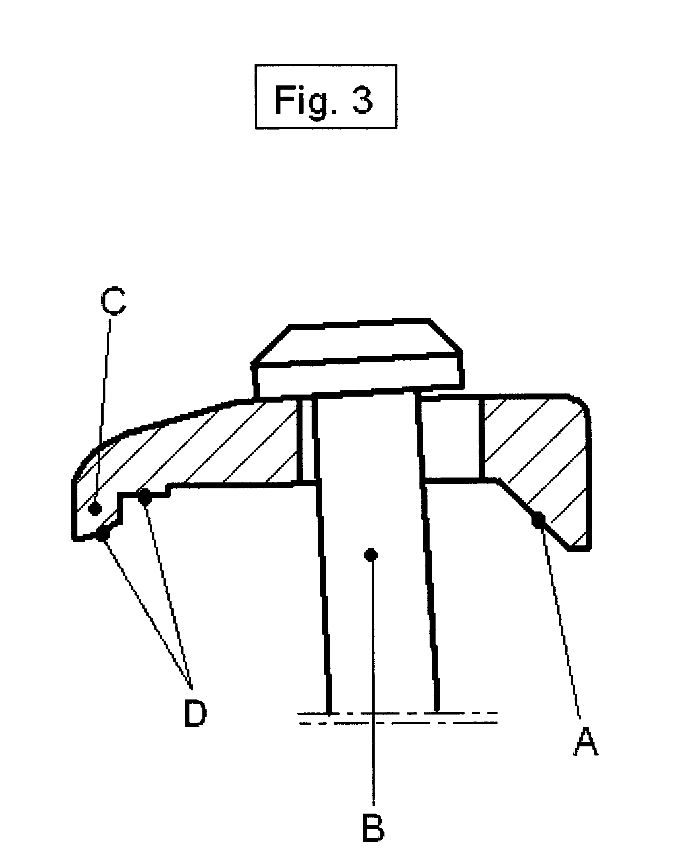

One of the vertical bearing surface is equipped with a threaded hole fig.1 (D), for the insertion of the respective projection of the fixing acessory fig. 3 (C).

On the upper surface of the locking tool are obtained threaded holes fig. 1(E) - with the same function of the hole fig. 1 (D) - and inclined surfaces fig. 1 (F), for the bearing of the respective surfaces of the flask.

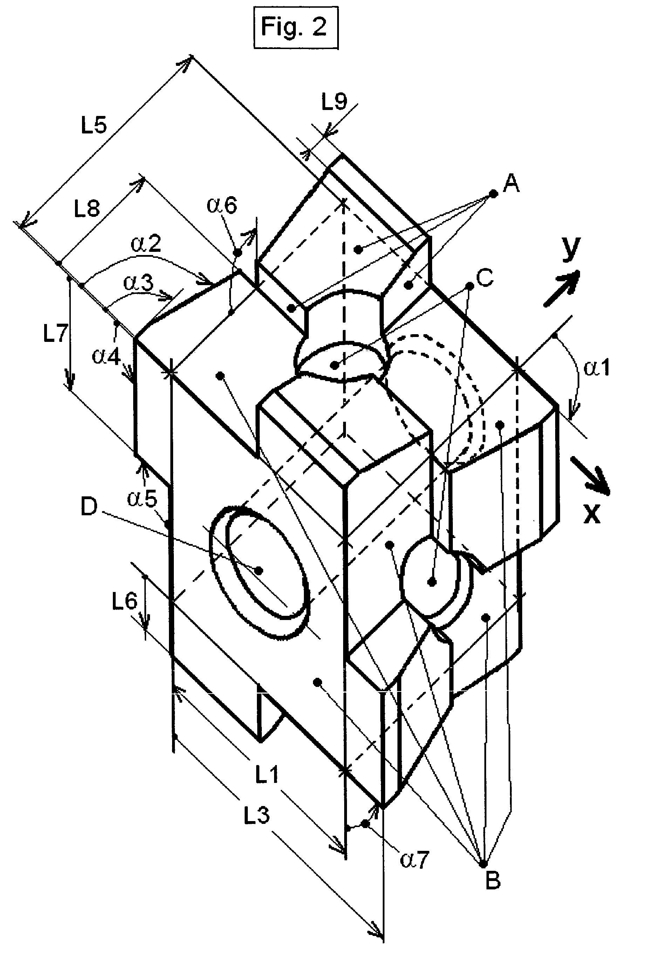

Fig. 2 represents the insert in accordance to the present invention, equipped with eight projection, enable to work in the two directions fig. 2 (X) and fig. 2 (Y).

The insert presents: inclined surfaces fig. 2 (A) for the fixing to the locking tool; bearing surfaces for the locking tool or a flask fig. 2 (B); embedding gaps for the fixing with flask fig. 2 (C); countersunk through hole fig. 2 (D) for the fixing with screw, lockpin, clamping lever, pin, tie, or eccentric.

The insertion of a fixing element in the said through hole or on the surfaces fig. 2 (A), adds further locking forces that maximize the stability of the insert during harder machinings.

Fig. 2 also represents the following angles, with specific amplitudes:
fig. 2 (α1) that can range between 60° and 170°;
fig. 2 (α2) that can range between 1° and 179°;
fig. 2 (α3) that can range between 0° and 178°;
fig. 2 (α4) that can range between 60° and 150°;
fig. 2 (α5) that can range between 30° and 165°;
fig. 2 (α6) that can range between 30° and 165°;
fig. 2 (α7) that can range between 45° and 125°.

Fig. 3 represents the longitudinal cutaway view of a double effect flask.

It is provided with projecting inclined surfaces, shaped as in fig. 3 (A) for the bearing to the respective inclined plans of the locking tool fig. 1 (F).

The flask is fixed to the locking tool by the means of a a screw fig 3 (B): the screwing down of the screw determines the lowering and the positioning of the flask's projection fig. 3 (C) in the respective embedding gaps fig. 2 (C) - or, alternatively, of the surfaces fig. 3 (D) on the respective surfaces fig. 2 (A) and fig. 2 (B) of the insert - and also the positioning of the inclined surfaces fig. 3 (A) on the respective surfaces fig. 1 (F) of the locking tool.

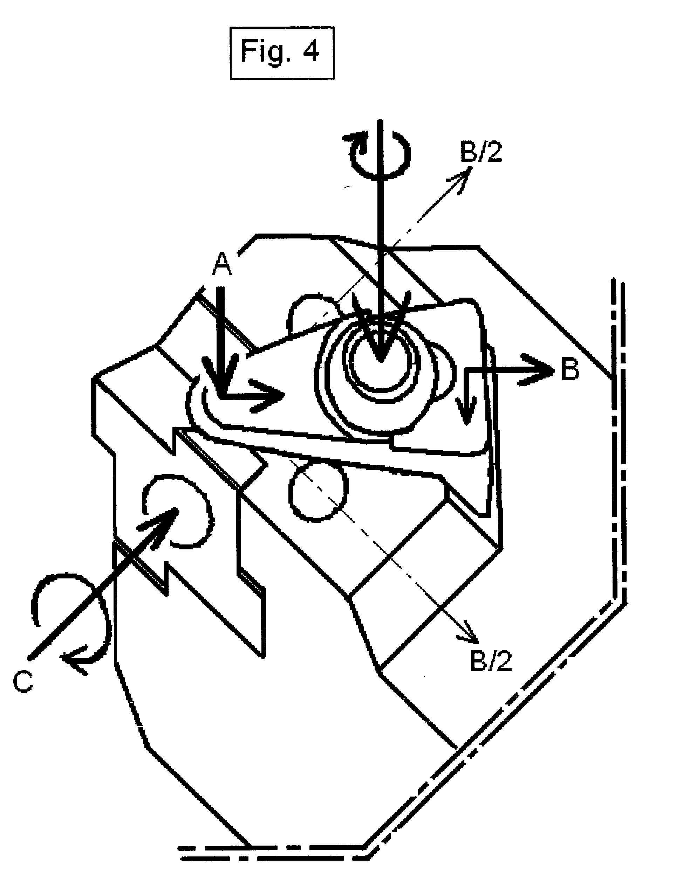

Fig. 4 represents the forces that assure the locking of the insert: compressive force fig. 4 (A), tractive force fig. 4 (B), and compressive force fig. 4 (C).

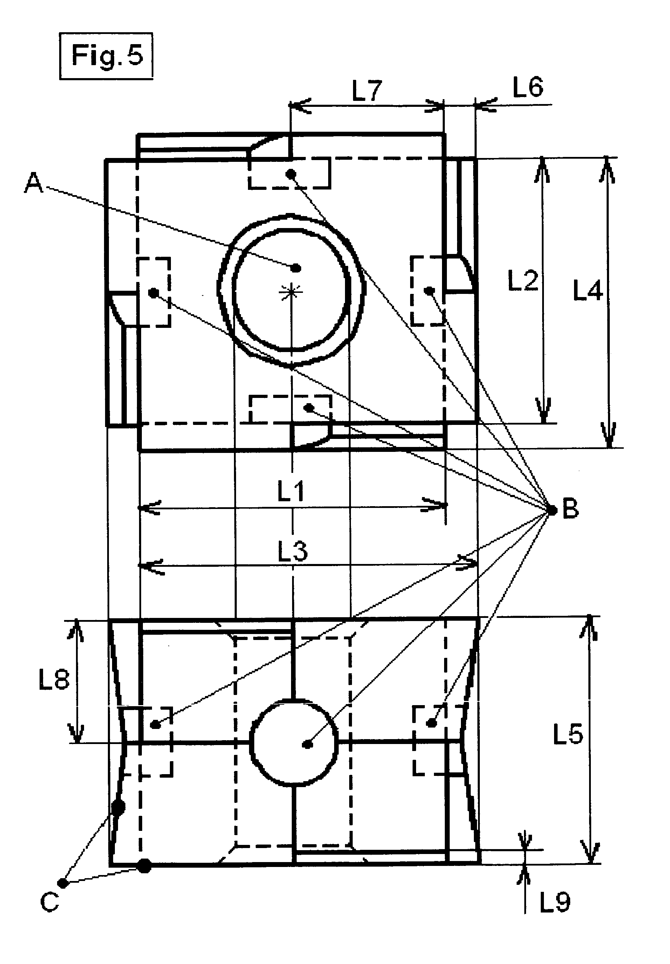

Fig. 5 represents plan and lateral view of the insert of fig. 2, with the countersunk through hole fig. 5 (A), embedding gaps fig. 5 (B) and cutting sides fig. 5 (C).

Fig. 5 also represents the following lengths, that are salient characteristics of the present invention:
fig. 5 (L1) uguale a fig. 5 (L2) with an error of +/-[0,2x[(L1+L2)/2]];
fig. 5 (L3) uguale a fig. 5 (L4) with an error of +/- [0,2x[(L3+L4)/2]];
fig. 5 (L5) variable between [(L1+L2)/2] + [0,4x[(L1+L2)/2]] and [(L1+L2)/2] - [0,8x((L1+L2)/2]];
fig. 5 (L6) greater or equal to zero;
fig. 5 (L7) variable between [(L1+L2)/2] e [(L1+L2)/2] - [0,8x[(L1+L2)/2]];
fig. 5 (L8) variable between (L5/2) + [0,8x(L5/2)] e (L5/2) - [0,95x(L5/2)];
fig. 5 (L9) variable between zero and fig. 5 (L8).

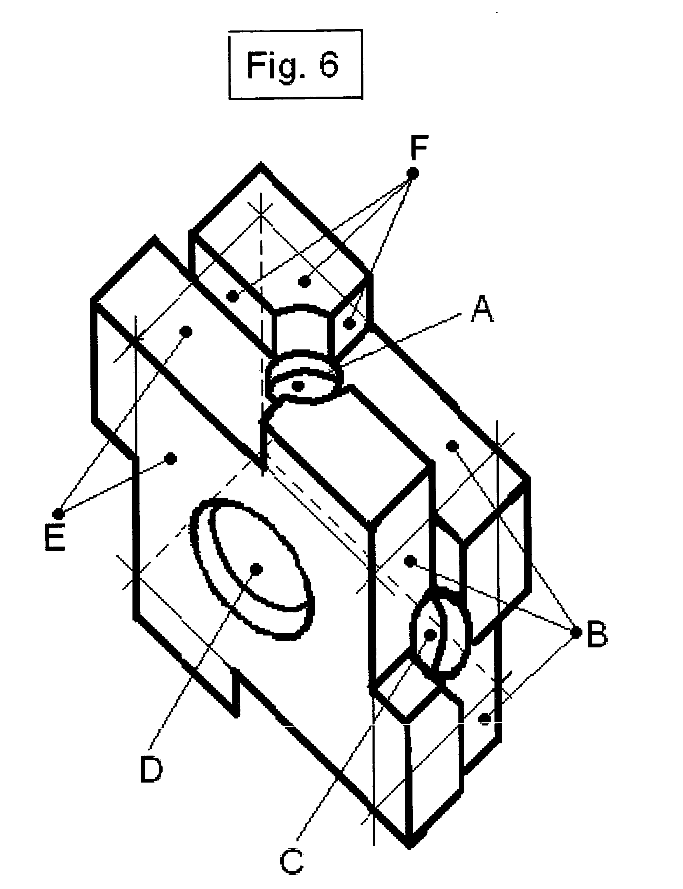

Fig. 6 represents a parallelepiped with projecting vertexes that can be shaped with mechanical workings.

The details represent embedding gaps fig. 6 (A) and fig. 6 (C), bearing surfaces fig. 6 (B), countersunk through hole fig. 6 (D), bearing surfaces fig. 6 (E) and surfaces suitable for the locking fig. 6 (F).

## Claims

1. Multi-cutting edge insert **charateryzed in that** it is equipped with inclined surfaces fig. 2 (A) and bearing surfaces fig. 2 (B) for the fixing of at least three points of a locking tool.

2. Multi-cutting edge insert **charateryzed in that** it is parelelepiped shaped and equipped with at most eight projections that comprises the respective bidirectional cutting vertexes. Each cutting vertex has a respective vertex comprised by the said two sides of the cutting vertex fig. 5 (C).

3. Multi-cutting edge insert **charateryzed in that** it allows the combined utilization of different fixing accessories, by the means of embedding gaps fig. 2 (C) and fig. 5 (B) and inclined surfaces fig. 2 (A) - for the fixing with flask - and moreover by the means of one or more countersunk through holes fig. 2 (D) for the fixing with screw, lockpin, clamping lever, pin, tie, or eccentric.

4. Use of the multi-cutting insert in accordance to the present invention combined with locking tool provided with threaded holes fig. 1 (E) and inclined surfaces fig. 1 (F) for the bearing of flasks equipped with suitable projections fig. 3 (A) and provided with three surfaces fig. 1 (A) - fig. 1 (B) - fig. 1 (C) for the bearing of the respective bearing surfaces of the insert fig. 2 (B) and at least equipped of countersunk through hole for the fixing with screw, lockpin, clamping lever, pin, tie, or eccentric.

5. Housing of the insert **charateryzed in that** it can be obtained on traditional tools or supports - fixed or rotating - on the perimeter or on the terminal or central part of said tools or supports.

6. Use of the insert **charateryzed in that** it can be supported by traditional support tools in accordance to international standard of construction and classification.

7. Multi-cutting edge insert **charateryzed in that** it presents the following lenghts: fig. 5 (L1) uguale a fig. 5 (L2) with an error of +/- [0,2x[(L1+L2)/2]]; fig. 5 (L3) uguale a fig. 5 (L4) with an error of +/- [0,2x[(L3+L4)/2]]; fig. 5 (L5) variable between [(L1+L2)/2] + [0,4x[(L1+L2)/2]] and [(L1+L2)/2] - [0,8x[(L1+L2)/2]]; fig. 5 (L6) greater or equal to zero; fig. 5 (L7) variable between [(L1+L2)/2] and [(L1+L2)/2] - [0,8x[(L1+L2)/2]]; fig. 5 (L8) variable between (L5/2) + [0,8x(L5/2)] and (L5/2) - [0,95x(L5/2)]; fig. 5 (L9) variable between zero and fig. 5 (L8).

8. Multi-cutting edge insert **charateryzed in that** it presents the following angles: fig. 2 (α1) that can range between 60° and 170°; fig. 2 (α2) that can range between 1° and 179°; fig. 2 (α3) that can range between 0° and 178°; fig. 2 (α4) that can range between 60° and 150°; fig. 2 (α5) that can range between 30° and 165°; fig. 2 (α6) that can range between 30° and 165°; fig. 2 (α7) that can range between 45° and 125°.
